# EUROPÄISCHE PATENTSCHRIFT

(11) **EP 2 361 353 B1**
(45) Veröffentlichungstag und Bekanntmachung des Hinweises auf die Patenterteilung: **11.07.2018**
(21) Anmeldenummer: 09764232.6
(22) Anmeldetag: 27.11.2009
(51) Int. Cl.: F16B 12/20, F16B 13/14, F16B 5/01

(54) **BESCHLAG ZUM FESTLEGEN EINER LEICHTBAUPLATTE**
FITTING FOR FASTENING A LIGHTWEIGHT PLATE
FERRURE PERMETTANT DE FIXER UN PANNEAU LÉGER

(30) Priorität: 27.11.2008 DE 202008015732 U; 27.11.2008 DE 202008015704 U; 27.11.2008 DE 202008015731 U; 27.11.2008 DE 202008015722 U
(43) Veröffentlichungstag der Anmeldung: 31.08.2011
(73) Patentinhaber: Hettich-Heinze GmbH & Co. KG, 32139 Spenge (DE)
(72) Erfinder: NOLTE, Frank, 49086 Osnabrück (DE)
(74) Vertreter: Dantz, Jan Henning
(86) Internationale Anmeldenummer: PCT/EP2009/065981
(87) Internationale Veröffentlichungsnummer: WO 2010/060988

(56) Entgegenhaltungen:
- WO-A1-2009/059896
- DE-A1-102009 005 596
- DE-U1-202008 002 540

## Beschreibung

Die vorliegende Erfindung betrifft einen Beschlag zum Festlegen einer aus zwei Deckplatten und einer dazwischen liegenden Mittelschicht bestehenden Leichtbauplatte an einer hierzu senkrecht verlaufenden zweiten Leichtbauplatte, einer Wand, einer ortsfesten Wandplatte oder dergleichen, wobei der Beschlag ein zwischen den Deckplatten durch Klebemittel festlegbares Gehäuse mit Kanälen zur Verteilung von Klebemittel und einen Einführkanal für einen Befestigungsstift aufweist, wobei die Kanäle für das Klebemittel einerseits in mindestens in eine von außen zugängliche Einfüllöffnung und andererseits in die jeweils an den Deckplatten der Leichtbauplatte anliegende randseitige Bereiche mit Aufnahmekammern für Klebemittel bildende Vertiefungen einmünden.

Im Möbelbau finden zunehmend Leichtbauplatten Verwendung.

Dabei weicht die Mittelschicht generell in ihren chemischen und/oder physikalischen Eigenschaften von den Deckplatten ab.

Bekannt sind Leichtbauplatten, bei denen die Mittelschicht aus leichten Hölzern wie z.B. Balsa bestehen. Es sind auch Leichtbauplatten bekannt, bei denen die Mittelschicht aus Fasermaterialien wie z.B. Hanf- oder Strohfasern aufgebaut ist. Weiterhin können in der Mittelschicht auch Hohlräume wie z.B. bei Strangpress-Röhrenspannplatten oder Wabenplatten erzeugt werden.

Außerdem kann die Dichte zwischen Mittelschicht und Deckplatten variiert werden, um eine Leichtbauplatte zu erhalten. Denkbar ist auch, die Mittelschicht als Schaum auszuführen wie z.B. bei Schaumkernplatten. Weiterhin ist es denkbar, zur Erhöhung der Stabilität zusätzlich weitere mit den physikalischen und/oder chemischen Eigenschaften der Deckplatten identische Zwischenplatten in das Verbundmaterial einzubringen.

Die vorstehend genannten Bauweisen sind nur beispielhaft zu verstehen und bilden keine abschließende Aufzählung aller Varianten zur Bildung von Leichtbauplatten.

Deckplatten der Leichtbauplatten sind bevorzugt darauf ausgelegt, Zugbelastungen Stand zu halten, während die Mittelschicht bevorzugt Druckbelastungen standhält. Eine weitere Betrachtung kann aus der Sicht eines Doppel-T-Trägers, wie er aus dem Maschinenbau bekannt ist, vorgenommen werden. Die Mittelschicht einer Leichtbauplatte wirkt sich gemäß dieser Betrachtung weniger auf das Widerstandsmoment der Leichtbauplatte aus als die Deckplatten.

Randseitig sind die Leichtbauplatten üblicherweise mit Kantenleisten versehen, die insgesamt die Grundfläche der Leichtbauplatte wie einen Rahmen zwischen sich einschließen.

Ein Beschlag der gattungsgemäßen Art ist aus der DE 20 2008 002 540 U1 der Anmelderin bekannt.

Aufgabe der vorliegenden Erfindung ist es, einen Beschlag der bekannten Art dahingehend weiter zu verbessern, dass die für das Einbringen des Beschlages in eine Leichtbauplatte entstehenden Bearbeitungs- und Montagekosten deutlich verringert werden können.

Diese Aufgabe wird erfindungsgemäß dadurch gelöst, dass das Gehäuse in eine Bohrung der Leichtbauplatte eingesetzt ist, welche mindestens eine der Deckplatten geringfügig anschneidet und dass die Aufnahmekammern des Gehäuses durch einen angeschnittenen Abschnitt zur jeweiligen Deckplatte hin abgeschlossen oder durch eine Deckplatte unmittelbar abgeschlossen sind.

Der Vorteil dieser Konstruktion liegt darin, dass das Einbringen einer Bohrung in eine Leichtbauplatte einfach und kostengünstig zu realisieren ist, wohingegen beim vorbekannten Stand der Technik aufgrund der Querschnittsform des Gehäuses eine entsprechende Öffnung in eine Leichtbauplatte gefräst werden muss.

Bevorzugt ist eine Ausführungsform der Erfindung, bei der beide Deckplatten durch die Bohrung geringfügig angeschnitten sind und dass beide Aufnahmekammern des Gehäuses durch die angeschnittenen Abschnitte zur jeweiligen Deckplatte hin abgeschlossen sind.

Hierdurch wird eine symmetrische Anordnung innerhalb der Leichtbauplatte erreicht und außerdem erfolgt auf beiden Seiten des Gehäuses eine stabile und hoch belastbare Verbindung zu den Deckplatten der Leichtbauplatte.

Nach der Erfindung ist vorgesehen, dass zu beiden Seiten des Gehäuses je ein einen kleineren Durchmesser als das Gehäuse aufweisender und sich mit dem Gehäuse überschneidender Topf einstückig angeformt ist und dass die seitlichen Töpfe in entsprechend dimensionierte Bohrungen der Leichtbauplatte eingreifen.

Hierdurch wird auf einfache Art und Weise eine Verdrehsicherung für den gesamten Beschlag relativ zur Leichtbauplatte ebenso sichergestellt, wie eine Einbaulage, die sicherstellt, dass die Aufnahmekammern zuverlässig im Bereich der angeschnittenen Bereiche der Deckplatten liegen.

Vorteilhafterweise ist das Gehäuse mit einer zentral angeordneten und über das in die Leichtbauplatte hineinragende stirnseitige Ende des Gehäuses hinausragenden und den Einführkanal für den dübelartigen Befestigungsstift verlängernden Aufnahmehülse versehen.

Die Aufnahmehülse ist nach einer Weiterentwicklung der Erfindung mit mindestens einer in Richtung des Befestigungsstiftes vorstehenden Klemmwulst ausgestattet.

Dies ermöglicht eine reibschlüssige Festlegung zwischen Befestigungsstift und Aufnahmehülse, außerdem wird hierdurch eine toleranzfreie Verbindung zwischen Befestigungsstift einerseits und Aufnahmehülse andererseits in deren Längsachse realisiert.

Die Beschläge weisen in ihrer Ausdehnung in Richtung der beiden Deckplatten der Leichtbauplatte ein größeres Maß als der lichte Innenabstand zwischen den beiden Deckplatten auf.

Weitere Merkmale der Erfindung sind Gegenstand weiterer Unteransprüche.

Ausführungsbeispiele der Erfindung sind in den beigefügten Zeichnungen dargestellt und werden im Folgenden näher beschrieben.

Es zeigen:
- Figur 1: eine perspektivische, teilweise im Schnitt dargestellte Ansicht einer Leichtbauplatte mit eingesetztem erfindungsgemäßen Beschlag und einen in diesen Beschlag einführbaren Befestigungsstift
- Figur 2: einen Längsschnitt durch den in die Leichtbauplatte eingesetzten Beschlag mit noch nicht eingeführten Befestigungsstift
- Figur 3: eine Draufsicht auf den Beschlag mit eingeschobenem Befestigungsstift
- Figur 4: einen Schnitt nach der Linie IV-IV in Figur 3, und
- Figur 5: eine perspektivische Sprengbilddarstellung von Beschlag und Befestigungsstift.

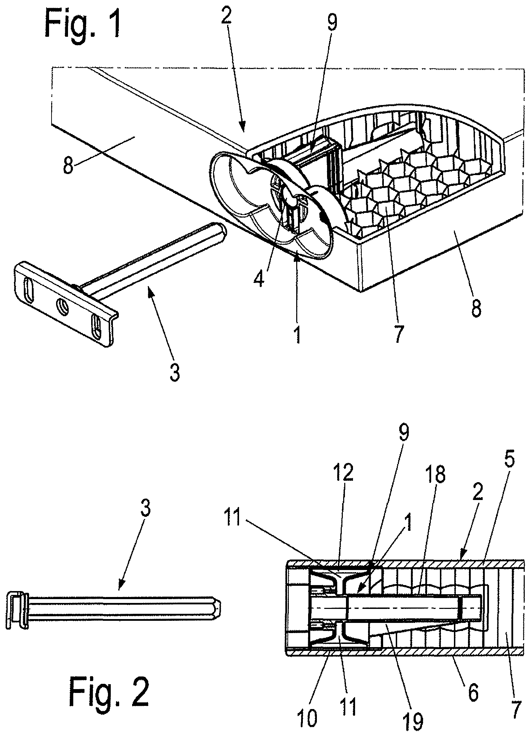

In den Figuren 1 bis 5 ist ein Beschlag 1 nach einem ersten Ausführungsbeispiel der Erfindung dargestellt, der zum Festlegen einer Leichtbauplatte 2 (siehe Figuren 1 und 2) an einer hierzu senkrecht verlaufenden zweiten Leichtbauplatte, einer Wand, einer ortsfesten Wandplatte oder dergleichen dient.

In den Zeichnungen ist diese zweite Leichtbauplatte, eine Wand, eine ortsfeste Wandplatte oder dergleichen nicht dargestellt, es ist lediglich ein Befestigungsstift 3 gezeigt, der lotrecht verlaufend an einer zweiten Leichtbauplatte oder dergleichen befestigbar ist und in einen Einführkanal 4 des Beschlages eingesteckt und dort in noch zu beschreibender Weise fixierbar ist.

Die Leichtbauplatte 2 besteht in bekannter Weise aus zwei relativ stabilen Deckplatten 5 und 6 sowie einer dazwischen liegenden Mittelschicht 7.

Es sei an dieser Stelle ausdrücklich darauf aufmerksam gemacht, dass im Rahmen der vorliegenden Erfindung der Begriff "Leichtbauplatte" auch solche Platten einschließen soll, bei denen statt der Mittelschicht 7 in Form einer Wabenstruktur zwischen den beiden Deckplatten 5 und 6 auch andere Leichtbaumaterialien und/oder -strukturen angeordnet sind.

Randseitig ist die Leichtbauplatte 2 mit Kantenleisten 8 versehen, die insgesamt die Grundfläche der Leichtbauplatte 2 wie einen Rahmen zwischen sich einschließen.

Der Beschlag 1 weist ein zwischen den Deckplatten 5 und 6 der Leichtbauplatte 2 durch Klebemittel festlegbares Gehäuse 9 auf. Dieses Gehäuse 9 kann in eine Bohrung 10 der Leichtbauplatte 2 eingebracht werden, die geringfügig größer ist als der lichte Abstand zwischen den beiden Deckplatten 5 und 6, so dass die beiden Deckplatten 5 und 6 im Bohrungsbereich geringfügig angeschnitten werden.

Der Beschlag 1 weist in seiner Ausdehnung in Richtung der beiden Deckplatten 5 und 6 der Leichtbauplatte 2 ein größeres Maß als der lichte Innenabstand zwischen den beiden Decklagen 5 und 6 auf.

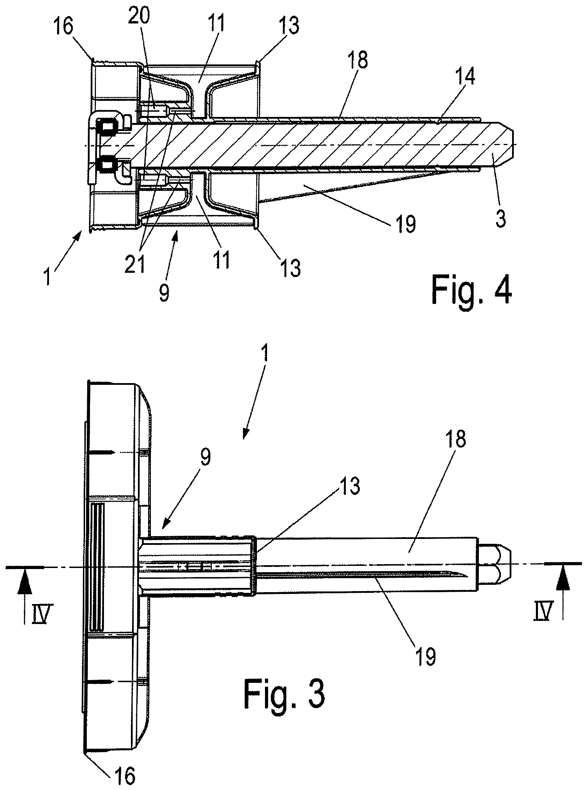

Das Gehäuse 9 weist außer dem Einführkanal 4 Kanäle 20 zum Einbringen eines Klebemittels auf, wobei diese Kanäle 20 einerseits von der Außenseite des Gehäuses 9 aus zugänglich sind und andererseits in Aufnahmekammern 11 einmünden. Die Aufnahmekammern 11 liegen mit ihren äußeren, seitlichen Randbereichen 12 an den durch die Bohrung 10 angeschnittenen Bereichen der Deckplatten 5 und 6 an und werden hierdurch nach außen abgeschlossen. In Achsrichtung sind die Aufnahmekammern 11 mit bogenförmigen und ebenfalls mit ihren Außenkanten an den angeschnittenen Bereichen der Deckplatten 5 und 6 anliegenden Wandungen 13 versehen, so dass eine auch in Achsrichtung geschlossene Aufnahmekammer auf jeder Seite des Gehäuses 9 gebildet wird. Dies ist besonders aus Figur 4 in Verbindung mit Figur 2 deutlich erkennbar.

Im Übergangsbereich zwischen den Kanälen 10 und den zugeordneten Aufnahmekammern 11 ist jeweils eine durch eine Querschnittsverengung gebildete Blende 21 vorgesehen, die bewirkt, dass der Rücklauf von in die Aufnahmekammern 11 eingebrachtem Klebemittel vermieden wird.

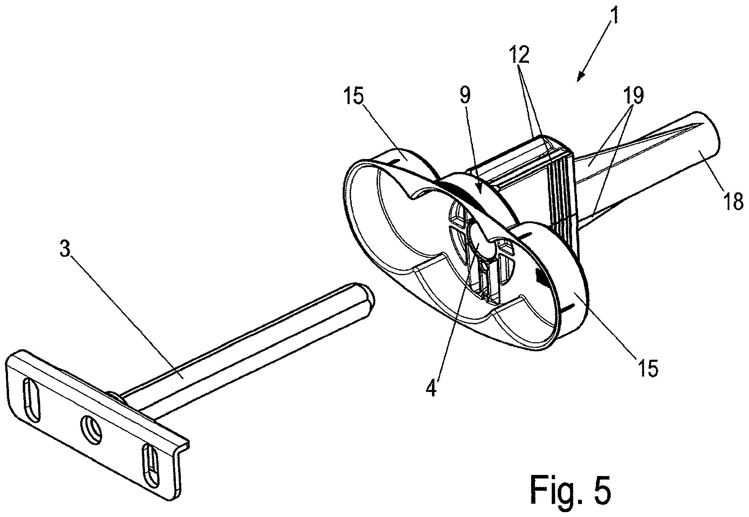

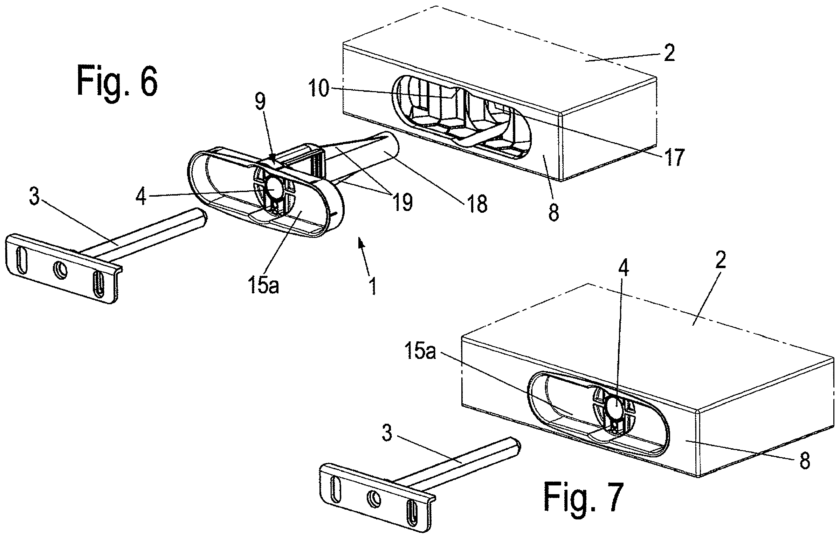

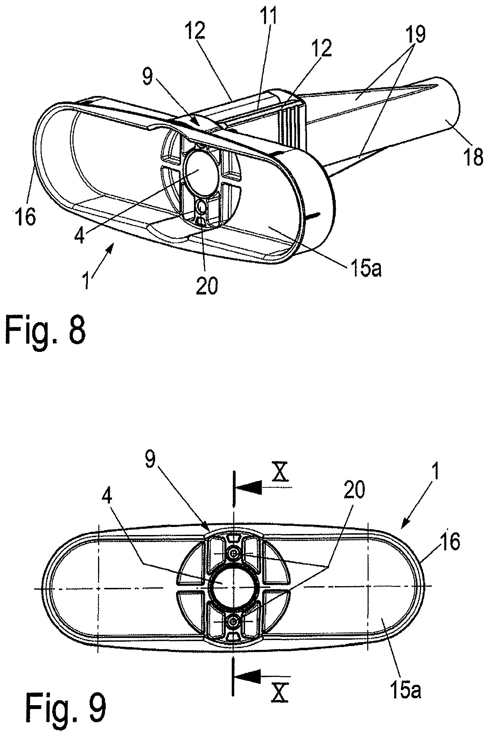

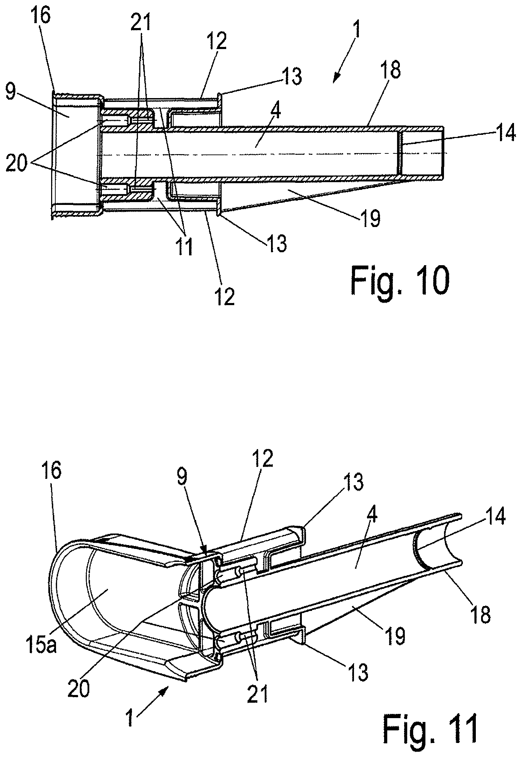

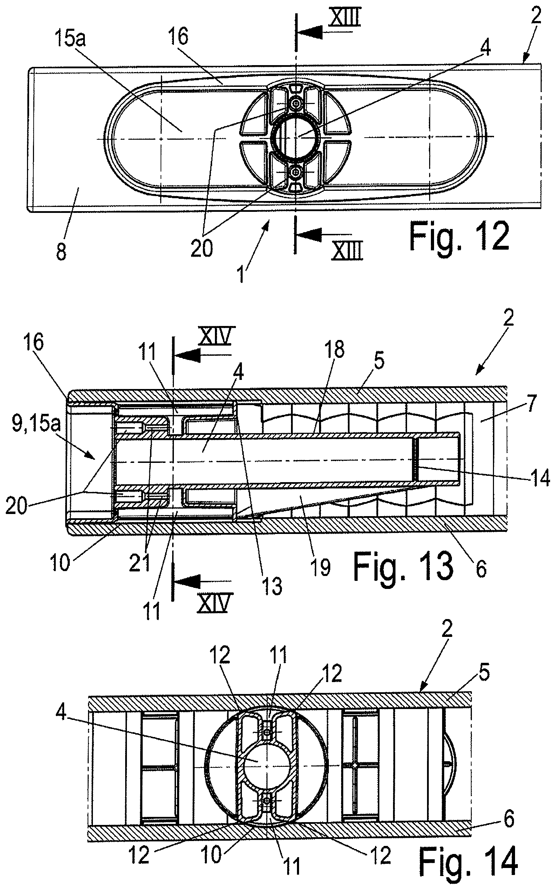

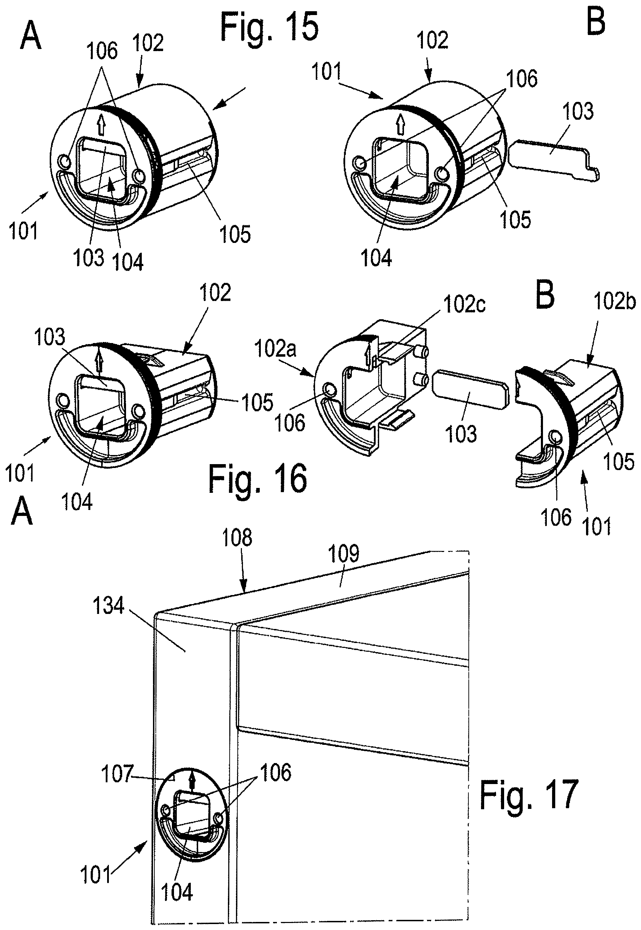

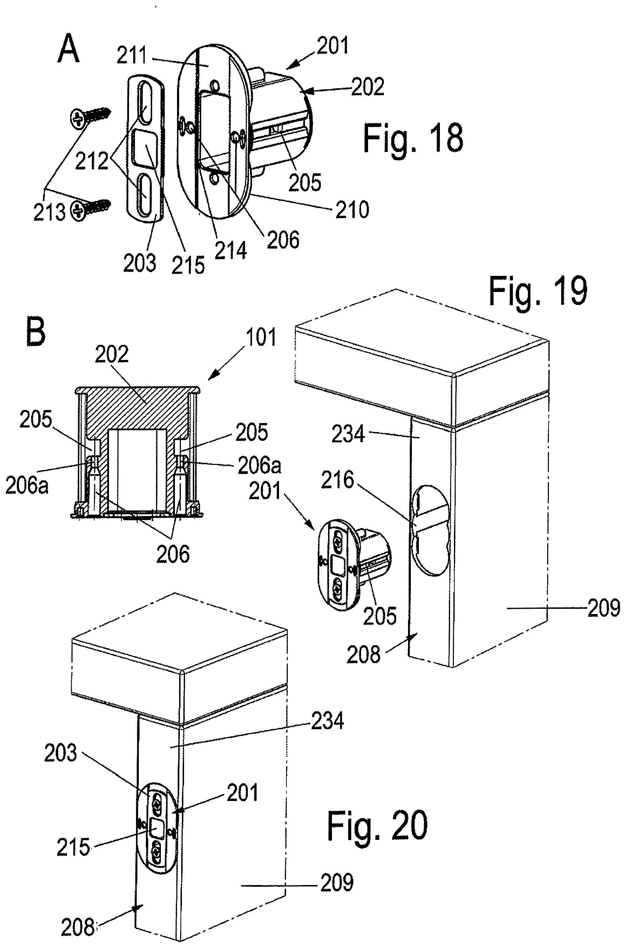

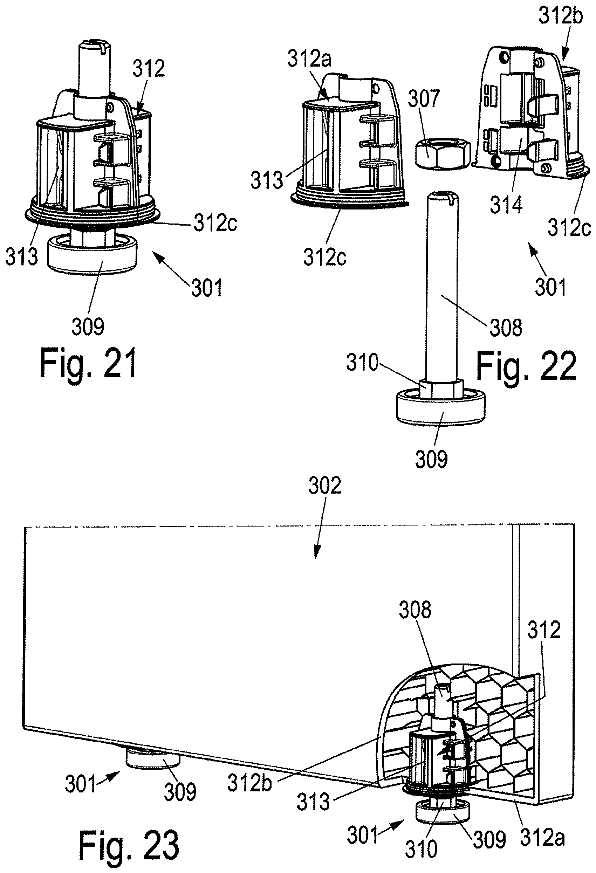

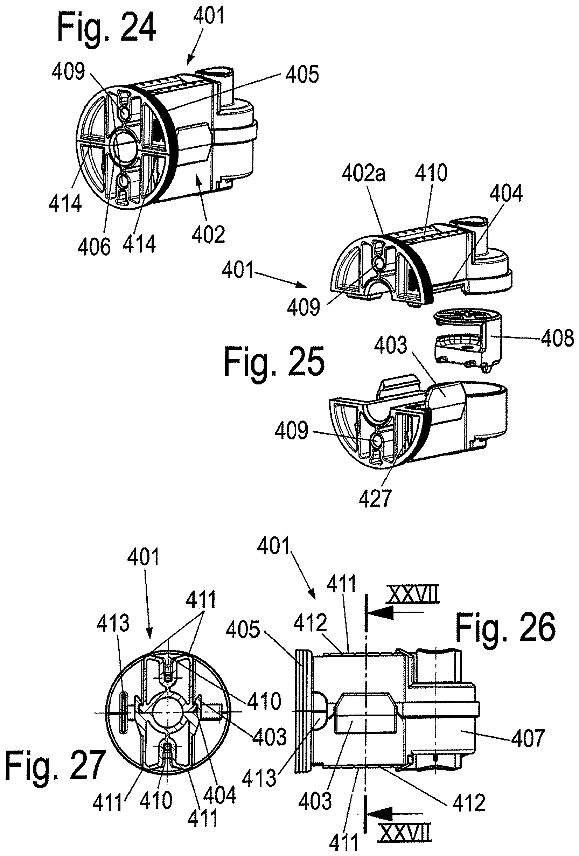

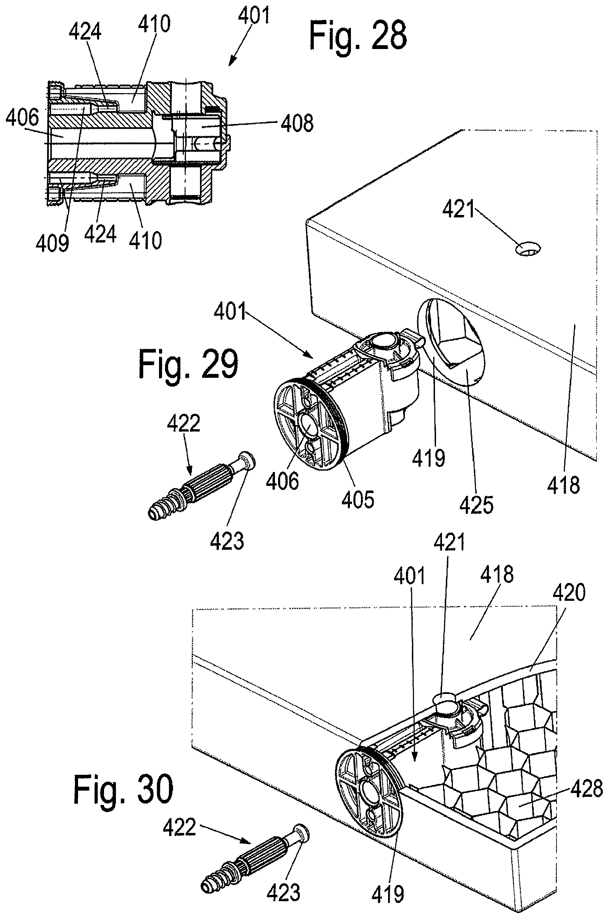

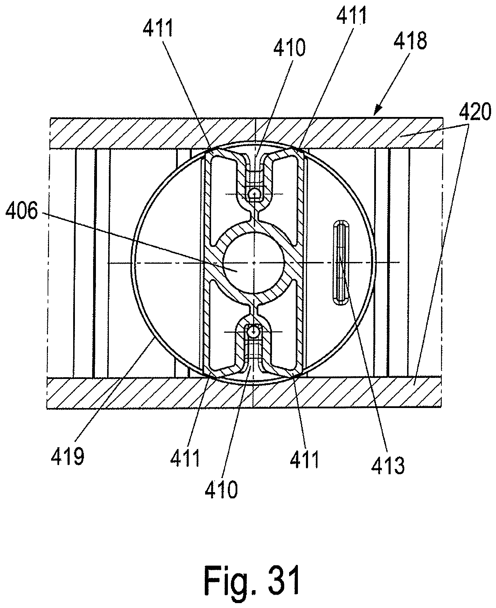

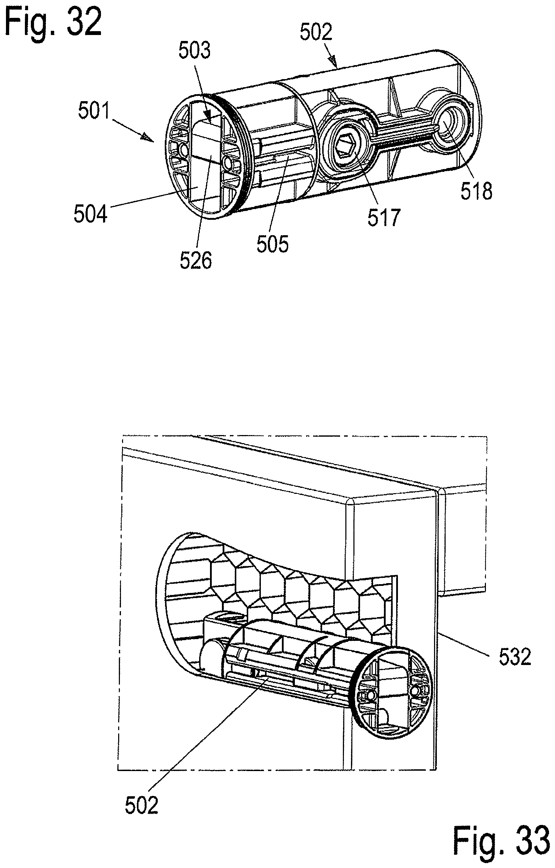

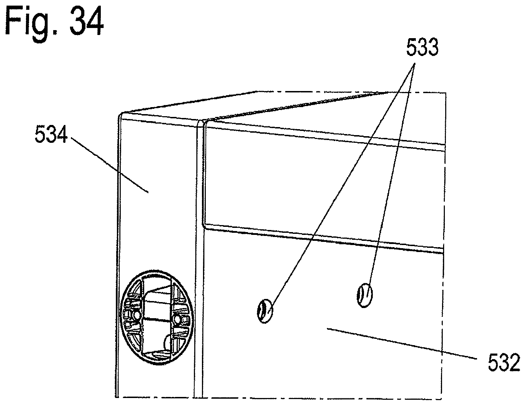

Wie insbesondere die Figuren 4 und 5 deutlich machen, ist der Einführkanal 4 für den Befestigungsstift 3 in Achsrichtung offen ausgeführt. Außerdem ist der Einführkanal 4 insgesamt etwas kürzer ausgebildet, als die Länge des Befestigungsstiftes 3, so dass dieser Befestigungsstift 3 über den ins Innere der Leichtbauplatte 2 hineinragenden Endabschnitt des Einführkanales 4 hinaus vorstehen kann.

Wie Figur 4 deutlich macht, ist innerhalb des Einführkanales 4 mindestens eine in Richtung des Befestigungsstiftes 3 vorstehende Klemmwulst 14 vorgesehen, durch welche der Befestigungsstift 3 reibschlüssig in dem Einführkanal 4 fixierbar ist. Es können auch weitere Klemmwülste 14 vorgesehen sein, um die Fixierung des Befestigungsstiftes 3 relativ zum Einführkanal 4 zu verbessern.

Da in der Praxis eine Belastung der Verbindung nahezu ausschließlich quer zur Längsachse des Befestigungsstiftes 3 und nicht in dessen Achsrichtung erfolgt, genügt eine klemmende Verbindung oder Festlegung des Befestigungsstiftes 3 innerhalb des Einführkanales 4.

Zur Außenseite der Leichtbauplatte 2 hin gesehen, ist das Gehäuse 9 im Wesentlichen topfartig ausgebildet. Wie besonders die Figuren 1 und 5 deutlich zeigen, sind zu beiden Seiten des Gehäuses 9 weitere Töpfe 15 einstückig angeformt, die ebenfalls einen kreisrunden Querschnitt aufweisen und den runden Querschnittsbereich des Gehäuses 9 überschneiden. Die zusätzlichen Töpfe 15 weisen einen kleineren Durchmesser auf als das Gehäuse 9, so dass entsprechende Bohrungen den Stirnkantenbereich einer Leichtbauplatte 2, in diesem Falle die Deckplatten 5 und 6 nicht anschneiden. Durch diese zusätzlichen Töpfe 15 wird eine verdrehsichere Anordnung des gesamten Beschlages 1 innerhalb einer Leichtbauplatte 2 auf einfache Art und Weise gewährleistet. Des weiteren wird erreicht, dass der notwendige Bauraum für den Beschlag 1 in der Leichtbauplatte geschaffen wird. Außerdem wird die für Umwelteinflüsse wie z.B. Feuchtigkeit anfällige Mittelschicht 7 durch den Beschlag mit Abschluss zu den Kantenleisten 8 geschützt.

Das Gehäuse 9 und die dazu seitlich angeordneten Töpfe 15 werden insgesamt überdeckt von einem umlaufenden, überstehenden Flansch 16, der im montierten Zustand des Beschlages 1 den Randbereich der Bohrungen für das Gehäuse 9 und die Töpfe 15 sauber abdeckt. Dieser Flansch 16 kann unmittelbar auf den Kantenleisten 8 aufliegen, es besteht aber auch die Möglichkeit, in die Kantenleisten 8 eine der Projektionsfläche des Flansches 16 entsprechend geformte und der Dicke des Flansches 16 entsprechende Ausfräsung einzubringen, so dass der Beschlag 1 insgesamt bündig abschließend mit einer Kantenleiste 8 montiert werden kann.

Insgesamt kann der Beschlag 1 z.B. einstückig aus Kunststoff hergestellt werden.

### Bezugszeichenliste

- 1: Beschlag
- 2: Leichtbauplatte
- 3: Befestigungsstift
- 4: Einführkanal
- 5: Deckplatte
- 6: Deckplatte
- 7: Mittelschicht
- 8: Kantenleisten
- 9: Gehäuse
- 10: Bohrung
- 11: Aufnahmekammer
- 12: Randseitiger Bereich
- 13: Wandung
- 14: Klemmwulst
- 15: Topf
- 15a: Gehäusetopf
- 16: Flansch
- 17: Ausfräsung
- 18: Aufnahmehülse
- 19: Rippe
- 20: Kanal
- 21: Blende

## Patentansprüche

1. Leichtbauplatte (2) mit einem Beschlag (1) zum Festlegen an der aus zwei Deckplatten (5, 6) und einer dazwischen liegenden Mittelschicht (7) bestehenden Leichtbauplatte (2) an einer hierzu senkrecht verlaufenden zweiten Leichtbauplatte, einer Wand, einer ortsfesten Wandplatte oder dergleichen, wobei der Beschlag (1) ein zwischen den Deckplatten (5, 6) durch Klebemittel festlegbares Gehäuse (9) mit Kanälen (20) zur Verteilung von Klebemittel und einen Einführkanal (4) für einen Befestigungsstift aufweist, wobei die Kanäle (20) für das Klebemittel einerseits in mindestens eine von außen zugängliche Einfüllöffnung und andererseits in die jeweils an den Deckplatten (5, 6) der Leichtbauplatte (2) anliegenden randseitigen Bereiche (12) mit Aufnahmekammern (11) für Klebemittel bildende Vertiefungen einmünden, **dadurch gekennzeichnet, dass** das Gehäuse (9) in eine Bohrung (10) der Leichtbauplatte (2) eingesetzt ist, welche mindestens eine der Deckplatten (5, 6) geringfügig anschneidet und dass die Aufnahmekammern (11) des Gehäuses (9) durch einen angeschnittenen Abschnitt zur jeweiligen Deckplatte (5, 6) hin oder durch eine Deckplatte (5, 6) unmittelbar abgeschlossen sind und zu beiden Seiten des Gehäuses (9) je ein einen kleineren Durchmesser als das Gehäuse (9) aufweisender und sich mit dem Gehäuse (9) überschneidender Topf (15) einstückig angeformt ist und dass die seitlichen Töpfe (15) in entsprechend dimensionierte Bohrungen der Leichtbauplatte (2) eingreifen

2. Leichtbauplatte mit einem Beschlag nach Anspruch 1, **dadurch gekennzeichnet, dass** die Aufnahmekammern (11) an ihrem dem Gehäuse (9) abgewandt liegenden stirnseitigen Ende durch der Kontur der angeschnittenen Bereiche der Deckplatten (5, 6) angepasste Wandungen (13) abgeschlossen sind.

3. Leichtbauplatte mit einem Beschlag nach Anspruch 1 oder 2, **dadurch gekennzeichnet, dass** beide Deckplatten (5, 6) durch die Bohrung (10) geringfügig angeschnitten sind und dass beide Aufnahmekammern (11) des Gehäuses (9) durch die angeschnittenen Abschnitte zur jeweiligen Deckplatte (5, 6) hin abgeschlossen sind.

4. Leichtbauplatte mit einem Beschlag nach einem der vorhergehenden Ansprüche, **dadurch gekennzeichnet, dass** das Gehäuse (9) mit einer zentral angeordneten und über das in die Leichtbauplatte (2) hineinragende stirnseitige Ende des Gehäuses (9) hinaus ragende und den Einführkanal (4) verlängernden Aufnahmehülse (18) für den Befestigungsstift (3) versehen ist.

5. Leichtbauplatte mit einem Beschlag nach einem der vorhergehenden Ansprüche, **dadurch gekennzeichnet, dass** im Einführkanal (4), bevorzugt im Bereich der Aufnahmehülse (18), mindestens eine in Richtung des Befestigungsstiftes (3) vorstehende Klemmwulst (14) angeformt ist.

6. Leichtbauplatte mit einem Beschlag nach einem der vorhergehenden Ansprüche, **dadurch gekennzeichnet, dass** der Einführkanal (4) in Achsrichtung beidseitig offen ist.

7. Leichtbauplatte mit einem Beschlag nach Anspruch 6, **dadurch gekennzeichnet, dass** die Länge des Einführkanales (4) bevorzugt kürzer ist als die Gesamtlänge des Befestigungsstiftes (3).

8. Leichtbauplatte mit einem Beschlag nach einem der vorhergehenden Ansprüche, **dadurch gekennzeichnet, dass** zwischen den Kanälen (20) zum Einfüllen von Klebemittel und den Aufnahmekammern (11) durch Querschnittsverminderungen gebildete Blenden (21) vorgesehen sind.

9. Leichtbauplatte mit einem Beschlag nach einem der vorhergehenden Ansprüche, **dadurch gekennzeichnet, dass** das Gehäuse (9) sowie die daran angeformten Töpfe (15) randseitig mit einem vorstehenden Flansch (16) ausgestattet ist.

10. Leichtbauplatte mit einem Beschlag nach einem der vorhergehenden Ansprüche, **dadurch gekennzeichnet, dass** das Gehäuse (9) mit allen gegebenenfalls daran angeformten Teilen (15, 16, 18, 19) einstückig aus Kunststoff gefertigt ist.

## Claims

1. Lightweight panel (2) having a fitting (1) for fixing the lightweight panel (2) consisting of two cover panels (5, 6) and an interposed middle layer (7) to a second lightweight panel, a wall, a stationary wall panel or the like, which is perpendicular thereto, wherein the fitting (1) has a housing (9), which can be fixed by adhesives between the cover panels (5, 6), with channels (20) for distributing adhesive and an insertion channel (4) for a fastening pin, wherein the channels (20) for the adhesive open on the one hand into at least one externally accessible filling opening and on the other hand into peripheral regions (12) respectively abutting the cover panels (5, 6) of the lightweight panel (2) and having recesses forming receiving chambers (11) for adhesives, **characterized in that** the housing (9) is inserted into a bore (10) of the lightweight panel (2), which at least slightly cuts into one of the cover panels (5, 6), and that the receiving chambers (11) of the housing (9) are directly terminated by an incised section towards the respective cover panel (5, 6) or by a cover panel (5, 6), and at both sides of the housing (9) in each case a pot (15) having a smaller diameter than the housing (9) and intersecting with the housing (9) is integrally attached, and that the lateral pots (15) engage in correspondingly dimensioned holes of the lightweight panel (2).

2. Lightweight panel having a fitting according to claim 1, **characterized in that** at their face end facing away from the housing (9) the receiving chambers (11) are terminated by walls (13) adapted by the contour of the incised portions of the cover panels (5, 6).

3. Lightweight panel having a fitting according to claim 1 or 2, **characterized in that** both cover panels (5, 6) are slightly cut by the bore (10) and that both receiving chambers (11) of the housing (9) are terminated by the incised portions towards the respective cover panel (5, 6).

4. Lightweight panel having a fitting according to one of the preceding claims, **characterized in that** the housing (9) is provided with a centrally disposed receiving sleeve (18) for the fastening pin (3), which sleeve protrudes beyond the face end of the housing (9) protruding into the lightweight panel (2) and extends the insertion channel (4).

5. Lightweight panel having a fitting according to one of the preceding claims, **characterized in that** in the insertion channel (4), preferably in the region of the receiving sleeve (18), at least one clamping bead (14) is integrally formed which projects in the direction of the fastening pin (3).

6. Lightweight panel having a fitting according to one of the preceding claims, **characterized in that** the insertion channel (4) is open on both sides in the axial direction.

7. Lightweight panel having a fitting according to claim 6, **characterized in that** the length of the insertion channel (4) is preferably shorter than the total length of the fastening pin (3).

8. Lightweight panel having a fitting according to one of the preceding claims, **characterized in that** baffles (21) formed by cross-section reductions are provided between the channels (20) for the filling of adhesive and the receiving chambers (11).

9. Lightweight panel having a fitting according to one of the preceding claims, **characterized in that** the housing (9) and the pots (15) integrally formed thereon are provided at the edge with a projecting flange (16).

10. Lightweight panel having a fitting according to one of the preceding claims, **characterized in that** the housing (9) is integrally made from plastic with all parts (15, 16, 18, 19) optionally integrally formed thereon.

## Revendications

1. Panneau alvéolaire (2) avec une ferrure (1) destinée à fixer le panneau alvéolaire (2) formé de deux panneaux de couverture (5, 6) et d'une couche intermédiaire (7) située entre ceux-ci sur un deuxième panneau alvéolaire perpendiculaire, un mur, un panneau de paroi fixe ou similaire, laquelle ferrure (1) présente un corps (9) pouvant être fixé avec de l'adhésif entre les panneaux de couverture (5, 6) et muni de canaux (20) pour la répartition de l'adhésif et un canal d'introduction (4) pour un moyen de fixation, les canaux (20) pour l'adhésif débouchant, d'une part, dans au moins une ouverture de remplissage accessible par l'extérieur et d'autre part dans les zones de bord (12) contigus des panneaux de couverture (5, 6) du panneau alvéolaire (2) avec des creux formant des compartiments de réception (11) pour l'adhésif, **caractérisé en ce que** le corps (9) est inséré dans un trou percé (10) du panneau alvéolaire (2) qui découpe légèrement au moins un des panneaux de couverture (5, 6) et **en ce que** les compartiments de réception (11) du corps (9) sont formés par une partie découpée par rapport au panneau de couverture (5, 6) correspondant ou directement par un panneau de couverture (5, 6) et un boîtier (15) présentant un plus petit diamètre que le corps (9) et se recoupant avec le corps (9) est formé d'un seul tenant des deux côtés du corps (9) et **en ce que** les boîtiers latéraux (15) se mettent en prise dans des perçages correspondant du panneau alvéolaire (2).

2. Panneau alvéolaire avec une ferrure selon la revendication 1, **caractérisé en ce que** les compartiments de réception (11) sont fermés, à leur extrémité frontale opposée au corps (9), par des parois (13) adaptées au contour des zones découpées des panneaux de couverture (5, 6).

3. Panneau alvéolaire avec une ferrure selon la revendication 1 ou 2, **caractérisé en ce que** les deux panneaux de couverture (5, 6) sont légèrement découpés par le perçage (10) et **en ce que** les deux compartiments de réception (11) du corps (9) sont fermés par les parties découpées vers le panneau de couverture (5, 6) correspondant.

4. Panneau alvéolaire avec une ferrure selon l'une des revendications précédentes, **caractérisé en ce que** le corps (9) est muni d'une douille de réception (18) pour la goupille de fixation (3) qui dépasse au-delà de l'extrémité frontale du corps (9) dépassant dans le panneau alvéolaire (2) et qui prolonge le canal d'introduction (4).

5. Panneau alvéolaire avec une ferrure selon l'une des revendications précédentes, **caractérisé en ce qu'**au moins un bourrelet de serrage (14) qui dépasse en direction de la goupille de fixation (3) est formé dans le canal d'introduction (4), de préférence au niveau de la douille de réception (18).

6. Panneau alvéolaire avec une ferrure selon l'une des revendications précédentes, **caractérisé en ce que** le can
al d'introduction (4) est ouvert des deux côtés dans la direction de l'axe.

7. Panneau alvéolaire avec une ferrure selon la revendication 6, **caractérisé en ce que** la longueur du canal d'introduction (4) est de préférence plus courte que la longueur totale de la goupille de fixation (3).

8. Panneau alvéolaire avec une ferrure selon l'une des revendications précédentes, **caractérisé en ce que** des chicanes (21) formées par des réductions de la section sont prévues entre les canaux (20) pour l'introduction d'adhésif et les compartiments de réception (11).

9. Panneau alvéolaire avec une ferrure selon l'une des revendications précédentes, **caractérisé en ce que** le corps (9) et les boîtiers (15) formés dessus sont munis sur le bord d'une bride (16) en saillie.

10. Panneau alvéolaire avec une ferrure selon l'une des revendications précédentes, **caractérisé en ce que** le corps (9) et toutes les pièces (15, 16, 18, 19) éventuellement formées dessus sont fabriqués d'un seul tenant en matière plastique.
